Europäisches Patentamt

**European Patent Office**

**Office européen des brevets**

(11) Publication number: **0 112 716**
A2

# EUROPEAN PATENT APPLICATION

(21) Application number: **83307793.6**

(51) Int. Cl.³: **H 04 L 5/20**, H 04 L 1/24

(22) Date of filing: **21.12.83**

---

(30) Priority: **22.12.82 US 452143**

(43) Date of publication of application: **04.07.84**
**Bulletin 84/27**

(84) Designated Contracting States: **DE FR GB IT**

(71) Applicant: **GENERAL DATACOMM INDUSTRIES, INC.,
One Kennedy Avenue, Danbury Connecticut 06810 (US)**

(72) Inventor: **Goldberg, Hugh Michael, One Dunnsinane
Road, Brookfield Connecticut (US)**
Inventor: **Dombrowski, Lawrence Charles, 135 Barn Hill
Road, Monroe Connecticut (US)**

(74) Representative: **McCallum, William Potter et al,
Cruikshank & Fairweather 19 Royal Exchange Square,
Glasgow G1 3AE Scotland (GB)**

---

(54) **Secondary channel method and apparatus.**

(57) A secondary data channel is described for use in a four-wire communication system in which there is continuous wire between each of two coupling transformers at a first station and each of two coupling transformers at a second station. In accordance with the invention, the transformer windings at each station that are connected to the transmission line wires are equipped with center taps G that are connected to a secondary channel data set. By these means a secondary data signal can be transmitted from one station to another by applying a signal to the center taps of the two coupling transformers at one station and receiving such signals from the center taps of the two coupling transformers at the other station.

## SECONDARY CHANNEL METHOD AND APPARATUS

### BACKGROUND OF THE INVENTION

This relates to a method and apparatus for providing a secondary data channel in a data communication system.

As is well known, data is often transmitted over conventional private and public telephone networks in the form of pulses of certain frequencies. At one station in the network, a modulating device called a data set, or modem, is used to convert a DC signal representative of a stream of digital data into an AC signal representative of this same stream of digital data. This signal is then applied to communication lines that are connected to one or more other stations in the network. At another station in the network, a second modem converts received AC signals back to digital DC signals. Ordinarily, data communication takes place in both directions in the system and each modem is equipped both to convert DC signals to AC signals that are transmitted and to convert received AC signals to DC signals. Thus, in a typical data communication system, each subscriber has at least one modem transmitter/receiver by which he communicates with at least one other modem transmitter/receiver.

Different arrangements may be used to interconnect the stations of the communication system. Of particular interest to the present invention is the four-wire, full duplex communication system in which two of the four wires of the communication lines are assigned to data transmission from a first station to a second and the other two wires are assigned to data transmission from the second station to the first. DC isolation between the modem and the communication lines is ordinarily provided by means of coupling transformers, one of which is located between the primary data set transmitter and its assigned communication lines and a second of which is located between the primary data set receiver and its assigned communication lines.

Extensive description of the operation of modems and communication systems may be found in James Martin's book Telecommunications and the Computer, (Prentice Hall, 1969); in U.S. Patent Nos. 3,655,915, 3,743,938, 3,769,454 and 3,869,577 all of which are incorporated herein by reference; and in the Bell System Data Communications Technical Reference entitled "Characteristics of Teletypewriter Exchange Service", (September 1970) available from: Engineering Director - Data Communications, American Telephone and Telegraph Company, 195 Broadway, New York, NY 10007.

Two types of data streams are typically transmitted over the communication system: primary data and secondary data. Primary data is the "message", the information that is being communicated from one location to another location by means of the communication system. Typically the source of this data is a computer, an intelligent terminal, a telex machine or other such equipment that is connected to one modem of the communication system; and these data are transmitted through the communication lines and a second modem to a data sink which can be another computer, intelligent terminal, telex machine or the like. In addition to transmitting primary data signals from one modem to another, it is frequently necessary for the data communication system to transmit secondary data signals between the two modems. These signals may, for example,

-3-

be control signals which control the operation of the modems or their connection to the sources or sinks of digital data at either end of the communication system. The signals could also be diagnostic or test signals which monitor the performance of the communication system such as attenuation levels, distortion or the like.

In the prior art, diagnostic and control signals are transmitted between the modems on a secondary channel. Such a channel may have the same communication lines and have transmission frequencies within the band of frequencies used for the communication of primary digital data. Alternatively, such a channel may be completely separate from the primary digital data communication lines. In general, however, such channels tend to be relatively expensive requiring substantial interconnection equipment such as filters and equalizers in the case of an in-band secondary channel and an entire channel in the case of an out-of-band system.

DISCLOSURE OF THE INVENTION

We have devised a method and apparatus for providing a low-cost secondary channel that minimizes interconnection requirements and does not require a second communication channel. Our invention may be implemented wherever individual stations are connected to one another by continuous wires without intervening amplifiers, filters, transformers or the like. Such connections are typically used in conventional four-wire local area networks.

In accordance with our invention, where one winding of each coupling transformer at a first station is connected in a four-wire system by continuous wires to a winding of the corresponding transformer in the second station, we provide a secondary channel by using balanced, center-tapped windings and applying secondary data signals to the center-taps of these windings. By these means we can impart a signal on one pair of the communication lines relative to the other pair of communication lines. Because the signal is applied at the center tap of the transformer winding, the signal is the same in both wires of the same pair of communication lines. As a result, the signal cannot be transmitted through a transformer and will not be received, for example, by the primary data receiver of a station modem. However, between the two pairs of communication lines there is a signal difference that can be detected by a conventional secondary data channel receiver.

### BEST MODE OF CARRYING OUT THE INVENTION

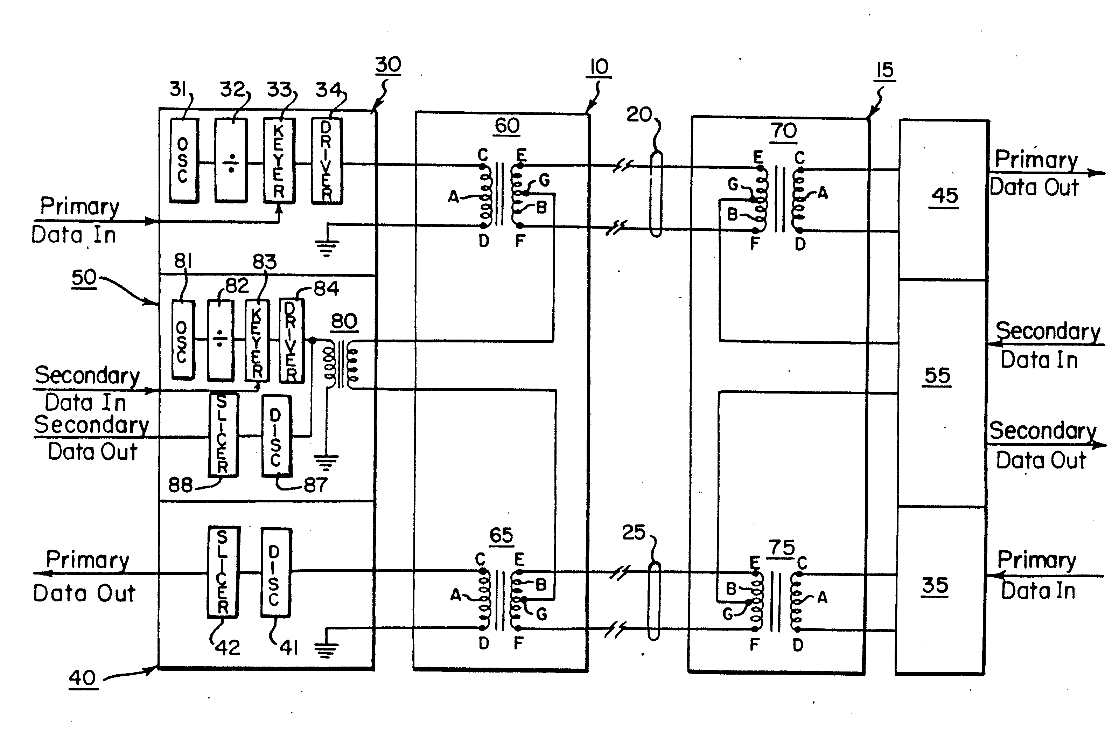

As shown in the drawing, an illustrative embodiment of our invention comprises first and second coupling networks 10, 15, first and second pairs of communication lines 20, 25, first and second primary data modem transmitters 30, 35, first and second primary data modem receivers 40, 45 and first and second secondary channel data sets 50, 55. The first coupling network comprises first and second transformers 60, 65 each of which includes a first winding A and a second winding B. First winding A has first and second terminals C, D and second winding B has first and second terminals E, F and a center-tapped terminal G. Similar coupling transformers 70, 75 are located in second coupling network 15. As shown in the drawing terminals C and D of transformer 60 are connected to first modem transmitter 30 and terminals E and F are connected to the two wires of communication lines 20. Terminals C and D of transformer 65 are connected to first modem receiver 40 and terminals E and F are connected to the two wires of communication line 25. In similar fashion, terminals C and D of transformer 70 are connected to second modem receiver 45 while terminals E and F of this transformer are connected to communication line 20; and terminals C and D of transformer 75 are connected to second modem transmitter 35 while terminals E and F are connected to the two wires of communication line 25. The center-tapped terminals G of transformer 60, 65 are connected to first secondary data set 50 and the center-tapped terminals G of transformers 70, 75 are connected to second secondary data set 55.

Primary data transmitters 30, 35, primary data receivers 40, 45 and secondary data sets 50, 55 are all conventional devices. Illustratively, primary data transmitter 30 includes oscillator 31, a frequency divider 32, a frequency shift keyer 33 and a line driver 34. Primary data receiver 40 illustratively includes a discriminator 41 and a slicer 42. Transmitter 35 and receiver 45 typically are identical to transmitter 30 and receiver 40.

Secondary data set 50 illustratively is a full duplex or half duplex device which includes both a transmitter and a receiver, only one of which will be operating at any one time, or a full duplex device, with the transmitter and receiver operating at the same time. As shown in the drawing, secondary data set 50 comprises a coupling transformer 80, an oscillator 81, a divider 82, a frequency set keyer 83, a line driver 84, a discriminator 87 and a slicer 88. As will be appreciated by those skilled in the art, elements 81-84 constitute a transmitter and elements 87-88 constitute a receiver. Secondary data set 55 typically is identical to data set

0112716

-6-

50. If desired, other types of primary and/or secondary data sets could also be used in the practice of the invention.

For communication of primary data, the illustrative apparatus of the drawing operates in conventional fashion with four-wire full-duplex primary data transmission taking place from transmitter 30 through communication lines 20 to receiver 45 and from transmitter 35 through comunication lines 25 to receiver 40. In addition to such primary data transmission, secondary data signals may also be transmitted between secondary sets 50, 55 by applying a secondary data signal to the center taps G of the two coupling transformers at one station and receiving such signal from the center taps G of the two coupling transformers at the other station.

Because the secondary data signal is applied at the center tap of each transformer winding, the signal is the same in both wires of the same pair of communication lines. In particular, the magnitude and direction of the current flow in both wires in the same pair of communication lines 20 or 25 is the same. As a result, the signal cannot be transmitted through a transformer and will not be received, for example, by the primary data receiver of a station modem. However, between the two pairs of communication lines there is a signal difference. For example, in sending a secondary data signal from data set 50 to data set 55, oscillator 81, frequency divdider 82, frequency shift keyer 83 and line driver 84 produce a time-varying secondary data signal that is coupled by transformer 80 to the center taps G of transformers 60, 65. As a result, the direction of current flow associated with the secondary data signal is away from the first secondary data set in one of the pairs of communication lines 20, 25 and is toward said first secondary data set in the other pair of communication lines. This difference in direction of current flow establishes a current flow in the winding of the coupling transformer of data set 55. This signal may then be applied to discriminator and slicer in that data set in conventional fashion to produce a secondary data signal output at data set 55.

As will be apparent to those skilled in the art, numerous other embodiments of my invention may readily be devised.

0112716

-8-

What is claimed is:

1. In a data communication system in which first and second stations are interconnected by a four-wire transmission line in which each wire of said transmission line is continuous between said first and second stations, apparatus providing for a secondary data channel comprising:

first and second coupling transformers at said first station for coupling a primary data set transmitter to a first pair of wires and a primary data set receiver to a second pair of wires in said four-wire transmission line, and

third and fourth coupling transformers at said second station for coupling a primary data set receiver and a primary data set transmitter to said first and second pairs of wires in said four-wire transmission line,

each of said first, second, third and fourth transformers including a center-tapped winding having first and second terminals that are connected to one of said of pairs of wires in said four-wire transmission line interconnecting said stations and a center-tap, the center-taps of said first and second transformers being connected to a first secondary data set associated with said first station and the center taps of said third and fourth transformers being connected to a second secondary data set associated with said second station.

2. The apparatus of claim 1 further comprising first and second secondary data sets, each secondary data set including a transmitter and a receiver equipped for full or half-duplex operation.

3.   In a data communication system in which:

first and second coupling transformers are located at a first station for coupling a primary data set transmitter to a first pair of wires and a primary data set receiver to a second pair of wires in a four-wire transmission line, and

third and fourth coupling transformers are located at a second station for coupling a primary data set receiver and a primary data set transmitter to said first and second pairs of wires in said four-wire transmission line, each of said first, second, third and fourth transformers including a first winding connected to a primary data set transmitter or receiver and a second winding connected to one of said pairs of wires in said transmission line, and

the wires of said transmission line are continuous between the second windings of said first and second coupling transformers at said first station and the second windings of said third and fourth coupling transformers at said second station,

apparatus for providing a secondary data channel comprising:

center taps in the second windings of each of said first, second, third and fourth transformers,

means for connecting said center taps of the two transformers at one station to a first secondary channel data set associated therewith, and

means for connecting said center taps of the two transformers at the other station to a second secondary channel data set associated therewith.

4. The apparatus of claim 3 further comprising first and second secondary data sets, each secondary data set including a transmitter and a receiver equipped for full or half-duplex operation.

5. In a data communication system in which:

first and second coupling transformers are located at a first station for coupling a primary data set transmitter to a first pair of wires and a primary data set receiver to a second pair of wires in a four-wire transmission line, and

third and fourth coupling transformers are located at a second station for coupling a primary data set receiver and a primary data set transmitter to said first and second pairs of wires in said four-wire transmission line, each of said first, second, third and fourth transformers including a first winding connected to a primary data set transmitter or receiver and a second winding connected to one of said pairs of wires in said transmission line, and

the wires of said transmission line are continuous between the second windings of said first and second coupling transformers at said first station and the second windings of said third and fourth coupling transformers at said second station,

a method of providing for a secondary data channel comprising the steps of:

applying secondary data signals to center taps in the second winding of the two transformers at one station and receiving said secondary data signals from center taps in the second winding of the two transformers at the other station.